# EUROPEAN PATENT APPLICATION

(11) **EP 3 503 436 A1**
(43) Date of publication of application: **26.06.2019**
(21) Application number: 17306891.7
(22) Date of filing: 22.12.2017
(51) Int. Cl.: H04B 10/294

(54) **WIDEBAND OPTICAL COMMUNICATION SYSTEM AND METHOD**

(71) Applicant: Nokia Solutions and Networks Oy, 02610 Espoo (FI)
(72) Inventor: RENAUDIER, Jeremie, 91620 Nozay (FR); CHARLET, Gabriel, 91620 Nozay (FR)
(74) Representative: Mills, Julia

(57) **Abstract**

Control circuitry, an optical communication system, a wideband semiconductor optical amplifier and a method of progressively adding channels to the optical communication system are disclosed. The optical communication system is configured to transmit a plurality of channels in different wavebands as a wideband wavelength division multiplexed signal, and comprises at least one wideband semiconductor optical amplifier for amplifying the wideband signal. The method comprises: preferentially selecting from available channels that are not currently assigned to an input signal, one of the longer wavelength channels as a next channel to be added to the system.

## Description

### FIELD OF THE INVENTION

The field of the invention relates to optical communication links, and in particular to optical links that transmit wavelength division multiplexed signals.

### BACKGROUND

There is an increasing demand for telecommunication services fuelled by new applications such as 5G wireless, cloud services, HD video on demand etc. This impacts all layers of the telecommunication infrastructures including the WDM (wavelength division multiplexing) networks. It would be desirable to be able to increase the capacity of optical fibre networks.

Conventionally signals are transmitted through optical links as C- and L-band wavelength division multiplexed (WDM) coherent optical communications using erbium doped fibre amplifiers (EDFA). In order to increase capacity techniques using pulse and constellation shaping techniques and digital nonlinear compensation, have recently been proposed. However, further improvement of system spectral efficiency (SE) via digital signal processing (DSP) innovations is increasingly challenging and comes with diminishing returns as the SE scales logarithmically with the signal-to-noise ratio (SNR). An orthogonal direction for the development of future transmission systems would be to increase the bandwidth of the optical amplifiers.

Semiconductor optical amplifiers (SOA) have been demonstrated to be able to exhibit more than 100 nm operation bandwidth, which is almost three times greater than the optical bandwidth of current systems that use EDFAs. However, one main drawback of using SOAs is that they may induce nonlinear distortions into the signal to be amplified. For this reason they have not conventionally been adopted for use as WDM line amplifiers.

It would be desirable to be able to increase the bandwidth for optical signal transmissions in optical fibres without unduly increasing the signal distortions.

### SUMMARY

A first aspect provides a method of progressively adding channels to an optical communication system configured to transmit a plurality of channels in different wavebands as a wideband wavelength division multiplexed signal, said optical communication system comprising at least one wideband semiconductor optical amplifier for amplifying said wideband signal, said method comprising: preferentially selecting from available channels that are not currently assigned to an input signal, one of the longer wavelength channels as a next channel to be added to the system.

The inventors of the present invention recognised that although in general, SOA gain medium acts as a high pass filter, it is sensitive to the slowly time power variance of the total optical field at its input thus inducing non-linear distortions. Such distortions render the amplifiers unacceptable for communication systems. However, if this time variance were to be reduced then the non-linear distortions would also be correspondingly reduced making the SOAs suitable for use in optical links. Increasing the bandwidth of transmission such that the optical power is spread over a very high number of independent WDM channels from an optical network is a way of reducing the time varying power variance of the optical signal. Thus, were the bandwidth of an SOA to be extended this would not only increase the bandwidth available for transmission but would also help with the signal distortion effects. It is found that if the bandwidth is increased significantly then the time varying power variance is sufficiently small to avoid drastic non-linear distortions from the SOA, such that massive coherent WDM systems become compliant with novel extended-bandwidth SOAs.

However, this spreading of the optical power over a high number of independent WDM channels is only effective where there are a large number of channels. When deploying new optical systems with wideband or ultrawideband SOAs, many customers will plan to fill the wide bandwidth progressively over time as their capacity needs increase. Usually customers need to deploy only a few line cards (being 100, 200 or 400Gb/ s) at the beginning of a system's life. Where the system is used with only a small number of channels, then the spreading of the optical power and the associated condition for reasonable performance operation with ultrawideband SOA may not be guaranteed.

However, the inventors found that the distortions generated by the SOAs were wavelength dependent and as such, were the channels to be introduced at longer wavelengths first, then the distortions would be reduced and the system would operate effectively both at high loading where the reduced time varying optical power variance reduces the signal distortions and at lower loading where the selected longer wavelengths act to reduce the signal distortions. Thus, a method of progressively adding channels to the optical communication system is provided that allows a wideband optical communication system with wideband semiconductor optical amplifiers to function effectively even when the optical communication system is not fully loaded and the advantages associated with the spreading of optical power across a wideband are not present. In effect loading design rules are provided for the system that allows it to operate consistently with low distortion and wideband operation at any loading.

In some embodiments the different wavebands of the channels form a continuous waveband, rather than a plurality of discrete wavebands.

Although the optical system will function in an improved manner if the loading of the channels is done by simply selecting the longer wavelength channels in preference to the shorter wavelength channels, it will be particularly advantageous if said step of preferentially selecting comprises selecting from a set of available channels where there are four or more available channels, the channels selected being in the upper 25% by wavelength of said set, or even more preferably if said step of preferentially selecting comprises selecting a highest wavelength channel from said available channels, such that said channels are filled progressively from a highest wavelength channel to a lowest wavelength channel.

In general, the differential gain of the semiconductor optical amplifiers increase as the wavelength reduces, while the gain shape stays almost constant for the longer wavelengths when the input power into the semiconductor optical amplifier is varied. Therefore, for the beginning of life systems where the input power to the amplifier is generally reduced, it is advantageous if the longer wavelengths are preferentially selected when a new channel is added. An improvement is felt if the channels that are selected are ones in the longer wavelength side of the available channels, but the best effect is achieved if the channels are selected such that the longest wavelength that is available is always selected.

The wideband semiconductor optical amplifiers are configured to operate at a significantly wider band than conventional amplifiers such as erbium doped fibre amplifiers and in some embodiments they are operable to amplify effectively over a bandwidth of more than 70nm, preferably more than 100nm. Thus, such systems almost triple the bandwidth of conventional optical links and the problems of distortion associated with these optical amplifiers are in effect addressed by this increased bandwidth and the associated spreading of optical power across the bandwidth that occurs and the preferential selection of longer wavelength channels where the system is lightly loaded.

A second aspect of the present invention provides control circuitry for controlling the addition of channels to an optical communication system configured to transmit a plurality of channels in different wavebands as a wideband wavelength division multiplexed signal, said optical communication system comprising at least one wideband semiconductor optical amplifier for amplifying said wideband signal; wherein said control circuitry is configured to: determine which of said plurality of channels are not currently assigned to an input signal and are available; and preferentially select one of the longer wavelength available channels as a next channel to be added to the system.

The addition of channels that are not currently assigned to the system as it is progressively loaded may be done manually according to the rules of the method of the first aspect or it may be done automatically using control circuitry which is configured to follow those rules. This control circuitry may have software such that when executed by a processor it controls the processor to perform the steps of the method of the first aspect or it may comprise hardware configured in this way. Automatically allocating the channels enables a complex system to operate effectively without requiring sophisticated training of the operators.

In some embodiments, said control circuitry is configured to select from a set of available channels where there are four or more available channels, the channels selected being in the upper 25% by wavelength of said set.

In some embodiments, said control circuitry is configured to select a highest wavelength channel from said available channels, such that said channels are filled under control of said control circuitry progressively from a highest wavelength channel to a lowest wavelength channel.

In some embodiments, said control circuitry is further configured to control an output power of said at least one wideband semiconductor optical amplifier, said control circuitry being configured to set said output power in dependence upon a number of channels currently assigned, such that said power is set to a lower value when a number of channels currently being amplified is lower and is set to a higher value when said number of assigned channels is higher.

In addition to controlling the loading of the channels and the allocation of the new signals to particular waveband channels, the control circuitry can also be configured to set the output power of the wideband semiconductor optical amplifiers. In this regard, the power of these amplifiers is dependent on the loading of the system and is reduced when the system is not fully loaded. Thus, control circuitry that is configured to control the allocation of channels during loading can also be used to effectively control the power of these amplifiers allowing the loading of the system to be performed automatically.

In some embodiments, the at least one semiconductor optical amplifier is operable to amplify over a bandwidth of more than 70nm, preferable more than 100nm.

A third aspect of the present invention provides an optical communication system, comprising: at least one wideband semiconductor optical amplifier operable to amplify an optical signal over a bandwidth of at least 70nm, said optical signal to be transmitted as a multi-channel wavelength division multiplexed signal along an optical fibre; and control circuitry according to a second aspect to the present invention, for controlling the addition of channels to said optical communication system.

Although the semiconductor optical amplifiers maybe configured in a number of different ways, in some embodiments each of said at least one wideband semiconductor optical amplifiers comprises a dual stage amplifier comprising two amplifiers with a gain flattening filter located between them, at least one of said two amplifiers comprising a semiconductor optical amplifier.

As noted previously, semiconductor optical amplifiers have not commonly been used in optical communication systems owing to the signal distortions that can occur induced by their non-linearity. In this regard such SOAs are sensitive to the slowly time power variance of the total optical field at their input which induces non-linear distortions. A spreading of the optical power over a very high number of independent wavelength division multiplexed channels for an optical network keeps this time varying power variance sufficiently small to reduce these non-linear distortions to an acceptable level. However, at low loading where the advantage of the optical power spreading is not achieved, distortions may again become an issue. This has been addressed by loading the device from the higher wavelength channels where lower distortion occurs; it can be further addressed by the use of dual stage amplifiers with a gain flattening filter between the amplifiers. This gain flattening filter helps to compensate for variations in the gain across the waveband and addresses the problem of non-linearities and helps provide a system with an acceptable performance even when not fully loaded.

In some embodiments, said dual stage amplifier comprises a variable optical attenuator downstream of said at least one semiconductor optical amplifier, said variable optical attenuator being operable to attenuate a signal output by said amplifier over said bandwidth of amplification.

The system may be further improved by the use of one or more variable optical attenuators which may be arranged to attenuate the signal output by the amplifier over the bandwidth. In this regard, a semiconductor optical amplifier is configured such that it operates most effectively and with the best amplification performance across a particular window of amplification. Where the system is lightly loaded, then output power and amplification should be reduced. In order to avoid stepping outside the amplification window where the semiconductor optical amplifier operates to best effect, at least some of the reduced amplification can be provided by a variable optical attenuator which in effect reduces the power output downstream of the optical amplifier allowing it to operate inside its preferred operating zone where gain is flatter.

It should be noted that the dual stage amplifier may only have one semiconductor optical amplifier and it may have a further wideband optical amplifier as the other amplifier. In this case there may only be one variable optical attenuator and it will be located after the semi-conductor optical amplifier. Alternatively, there may be two variable optical attenuators one after each amplifier and in some embodiments, the two amplifiers may be semiconductor optical amplifiers each having a downstream variable optical attenuator downstream.

In some embodiments, said control circuitry is configured to vary an output power of said at least one semiconductor output amplifier by setting said variable optical attenuator to an increased attenuation.

As noted previously, semiconductor amplifiers function most effectively within a certain power amplification window and if the amplification is to be taken outside of this window it may be more effective to use a variable optical attenuator to adjust the system rather than adjusting the power of the optical amplifier. As noted previously, the control circuitry that controls the addition of channels to the system may also be used to control the power of the semiconductor optical amplifiers and in some embodiments, they may control the power output by a semiconductor optical amplifier by controlling the variable optical attenuator as well as, or instead of, adjusting the power output by the semiconductor optical amplifier.

In some embodiments, said wideband of operation encompasses said C band and said L band.

As noted previously, the wideband semiconductor optical amplifier is configured such that it operates in some embodiments at about three times the bandwidth of a conventional optical amplifier. The conventional optical amplifiers are configured to operate in either the C band or the L band and the wavelength of operation of the semiconductor optical amplifiers encompasses both. This makes them compatible with legacy systems and means that such an optical system can be used to transmit signals received from a legacy system in addition to other signals.

In some embodiments, said optical communication system further comprises a wideband wave selective switch comprising an input for receiving signals from at least one optical fibre transmitting channels in one of said C band and said L band and at least one further input for receiving signals in at least one further waveband and an output for outputting said signals as said multi-channel wavelength division multiplexed signal to said optical fibre of said optical communication system.

In some cases, an optical communication system according to an embodiment can be combined with a legacy system using a wavelength selective switch such that signals transmitted by the legacy signal can be input to the optical communication system according to an embodiment and other signals can also be transmitted down such an optical link owing to the wider bandwidth.

It should be noted that embodiments can be used for data centre interconnections, terrestrial links, metropolitan links and/or submarine links. In data centre interconnections where the length of the fibre is shorter often between 20-100km, it may be that an amplifier is only required at either end of the optical link and as such upgrading such a system to a wideband system using the semiconductor optical amplifiers of embodiments would be straightforward and provide an effective increase in bandwidth.

A fourth aspect of the present invention provides a wideband optical amplifier operable to amplify an optical signal over a bandwidth of at least 70nm, said wideband optical amplifier comprises: a dual stage amplifier comprising a semiconductor optical amplifier, at least one further amplifier and a gain flattening filter located between them; wherein said dual stage semiconductor optical amplifier comprises at least one variable optical attenuator downstream of said at least one semiconductor amplifier, said variable optical attenuator being operable to attenuate a signal output by said amplifier over said bandwidth of amplification.

In some embodiments, said wideband semiconductor optical amplifier is operable to amplify an optical signal over a bandwidth of at least 100nm.

In some embodiments, said dual stage amplifier comprises two semiconductor amplifiers, each of said two semiconductor amplifiers comprising a variable optical attenuator downstream of said amplifier, said variable optical attenuator being operable to attenuate a signal output by said amplifier over said bandwidth of amplification.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates gain vs wavelength as input power changes with a pumping current of 1A;
Figure 2 illustrates output power versus input power for different pumping currents;
Figure 3 illustrates the operation of an SOA at larger gain than the optimal "flat gain";
Figure 4 schematically illustrates the wavelength loading scheme of embodiments;
Figure 5 illustrates examples of dual stage amplifiers with dual VOAs according to an embodiment, both when the amplifiers are fully loaded and when they are lightly loaded with few channels;
Figure 6 illustrates control circuitry according to an embodiment;
Figure 7 illustrates control circuitry according to a further embodiment;
Figure 8 illustrates an optical communication system according to an embodiment that is compatible with a legacy system;
Figure 9 illustrates a semiconductor optical amplifier and control circuitry according to an embodiment; and
Figure 10 illustrates a dual stage semiconductor optical amplifier and control circuitry according to an embodiment,

### DESCRIPTION OF THE EMBODIMENTS

Before discussing the embodiments in any more detail, first an overview will be provided.

A wideband SOA, a wideband optical communication system using such a wideband SOA and a method of operating such a wideband system in a way that acceptable performance is provided both when fully loaded and when lightly loaded is disclosed.

Embodiments provide an optimal or at least preferred filling over time of wideband sometimes termed ultrawideband optical communication systems based on wideband SOAs operable to amplify a signal across a waveband of more than 70nm, preferably more than 100nm.

Ultrawideband SOAs would be very effective at increasing the system capacity in optical networks or data centre interconnects if the signal distortion problems associated with such SOAs could be addressed. Custom designed SOA exhibiting 100nm optical bandwidth assembled in polarization diversity configuration have been found to be suitable for massive coherent WDM systems where a high number of independent WDM channels are transmitted as the spread of optical power due to the high number of channels reduces the generation of nonlinear distortions from the SOA at a high launch power in the fibre.

In order to address problems associated with early operating conditions where there may not be a high number of channels, the proposed idea is to define the best way of introducing new channels over time, starting from a beginning of life system with few wavelength channels, up to an end of life fully loaded system. Operating an SOA over such a wide band implies that certain characteristics of the gain material will vary with the wavelength. In particular, the filling of the conduction band in semiconductors at high pumping current will be higher for shorter wavelengths than it will be for longer wavelength. This induces a higher differential gain and thus higher gain profile distortion and higher induced non-linear distortions. As the non-linear distortions for SOAs are higher when they are lightly loaded and there is not the spread of optical power across many channels, it is advantageous to define how to insert progressively optical channels in such a wideband optical system. In particular, the problems associated with the low loading of the system can be mitigated if the system is loaded from the longer wavelength channels where the gain is flatter at lower loading.

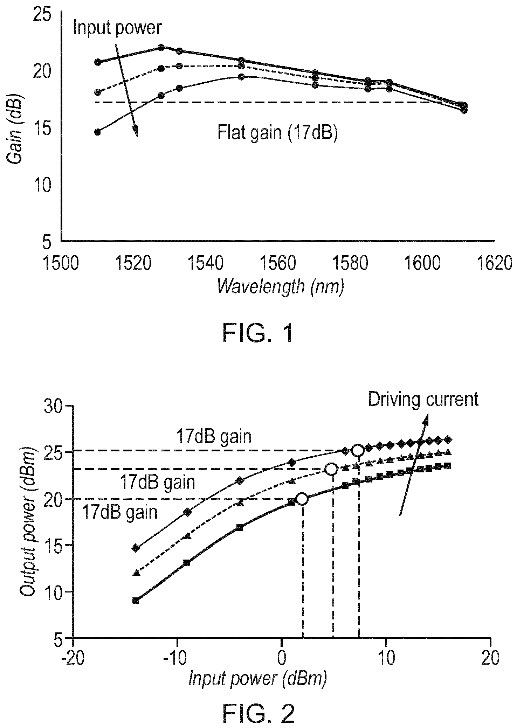

Figure 1 illustrates the evolution of the gain versus wavelength for a constant pumping or driving current. This figure shows that the differential gain increases when the wavelength is reduced, while the gain shape is almost constant for longer wavelengths when the input power into the SOA is varied.

Where a beginning of life system with only a few channels is to be installed, the operating current of the SOA is decreased to reduce the output power of the amplifier. In one embodiment, the SOAs provide a flat gain at around 17dB. The output power can be as large as 25dBm with a higher driving current and 17dB gain as shown in Fig. 2. When the current is reduced, the output power is decreased to 20dBm when keeping the same gain. Decreasing the current by too large an amount may be challenging if the power is to be reduced by more than 10dB (from 25dBm down to 15dBm), corresponding to a system operating at beginning of life with less than 10% of the total capacity.

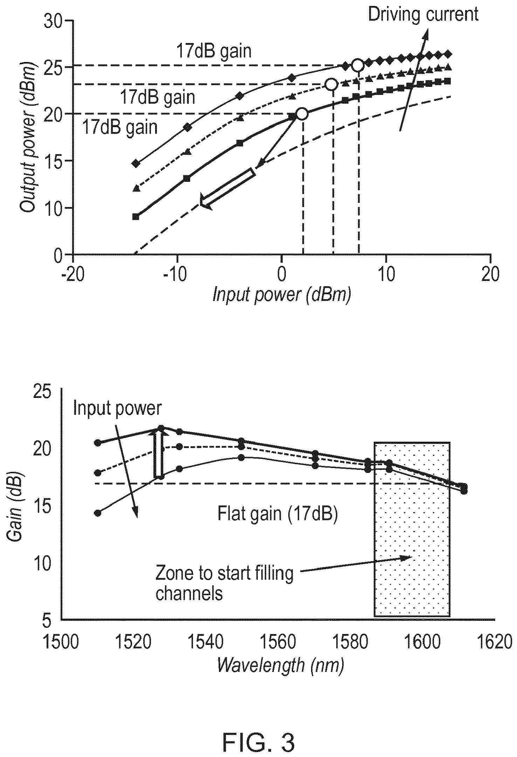

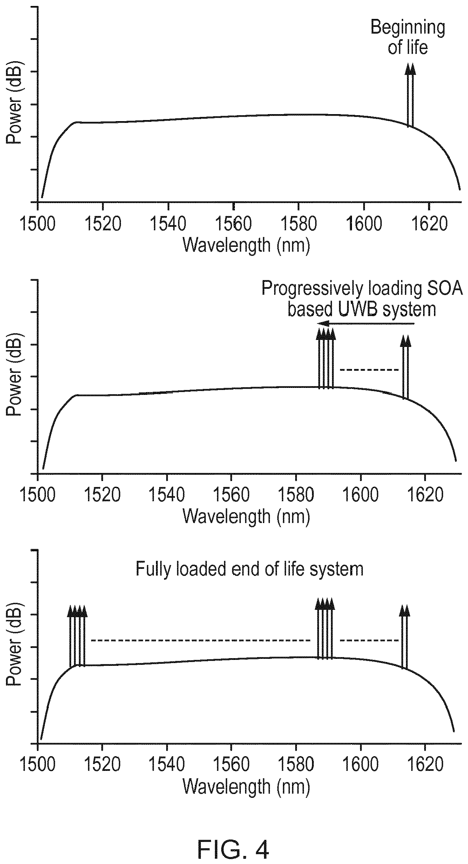

As decreasing the current below a given level (around 500mA in this case) will significantly degrade the characteristics of the SOAs (noise figure), it is proposed to operate the SOA in a regime where the gain is no longer the "flat gain" (17dB in this case), as shown in Figure 3. When the input power is further reduced for a lower driving current of about 500mA (arrow on upper figure), the gain is increased and the gain shape is particularly distorted at shorter wavelengths (vertical arrow on lower figure) because the filling of the conduction band in semiconductors at high pumping current is higher for shorter wavelengths. However the gain shape is almost unchanged for the longest wavelengths. Therefore it is advantageous to operate the systems at the beginning of their life by introducing channels starting from the highest wavelength as shown in Fig. 4. This will strongly reduce the issues related to lack of gain flatness when moving from a beginning of life configuration with fewer channels to a fully loaded configuration at end of life.

Moreover, the inventors found that the shorter wavelengths of the optical bandwidth may induce more nonlinear distortions, particularly when reducing the number of WDM channels. As illustrated in Fig. 1, the differential gain significantly increases when reducing the wavelength, leading to higher nonlinear sensitivity. Therefore, by starting to populate the bandwidth from the longer wavelengths to the shorter ones, even if the power variance of the total optical field is not unduly reduced at the low number of channels, the sensitivity of the gain will remain extremely low, thus providing an improved operation point.

While the system is loaded with additional channels, the bandwidth is preferably populated from the highest available wavelength to the lowest one. So where a massive WDM total field is transmitted, the region of shorter wavelengths will not introduce significant nonlinear distortions since the power variance of the field decreases as they are added late in the addition process.

Figure 4 schematically shows a wavelength loading scheme according to an embodiment. In this scheme at the beginning of life of the system where there are only a few channels present these are added at the far end of the longer wavelength side of the waveband. Further channels are progressively added from the longer wavelength end of the bandwidth towards the shorter wavelength end, the shortest wavelength channel being the last one to be filled.

In order to further improve the system and maintain the gain relatively flat across the bandwidth a novel arrangements of wideband SOAs may be used to help reduce distortions in the signal, particularly at low power operation with fewer channels.

In this regard, the semiconductor amplifiers are configured as dual stage amplifiers, with GFF (gain flattening filter) inserted in between the 2 stages and with VOAs (variable optical attenuator) used to keep a relatively flat gain by adjusting the loss so that the desired power can be achieved with the amplifier remaining within the preferred region of operation the so termed "flat gain" region. The dual stage amplifier may comprise one wideband SOA and one further amplifier of a similar bandwidth, the second wideband amplifier may be a wideband SOA or it may be a different type of wideband amplifier. Where there is only one SOA then there may only be one VOA to adjust the loss of the SOA or there maybe two VOAs one after each amplifier.

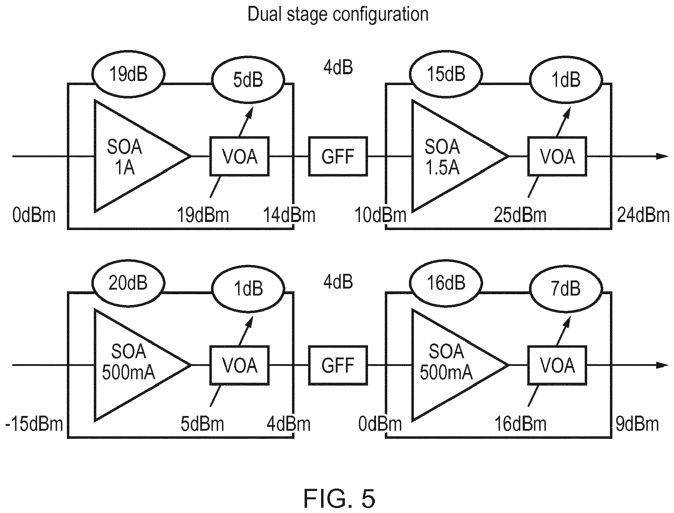

Figure 5 shows a dual stage amplifier according to an embodiment. In this embodiment, the dual stage amplifier comprises two SOAs, each with a downstream VOA and with a GFF in between them. By using the two VOAs as shown in Fig 5, the output power can be very significantly reduced with little gain variation within the SOA. In the example shown in Figure 5, the upper figure shows an example of a fully loaded system with the amplifiers operating at a high power. Thus, in this case the first amplifier provides a gain of 19dB and the second amplifier of 15dB providing in total 19dB+15dB = 2 x 17dB, thus providing relatively flat gain in the fully loaded system.

In the less loaded system in the second figure where a lower gain is required, the initial amplifier provides a gain of 20dB and the second of 16db, the VOAs reduce the amplification and in particular the second VOA reduces it by 7dB. Thus, in total there is a gain of 20dB+16dB = 2 x 17dB + 2dB thus providing a moderately tilted gain, while providing overall a 15dB output power reduction due to the reduction in the GFF and VOAs. A 15dB output power reduction corresponds to the operation with 3% of the channels (ie ~8 channels for a system designed for 250 channels). By using a dual stage amplifier with a GFF and with VOAs to reduce the amplification, an amplifier operating within a preferred operating region and with at least some of the distortions compensated for is provided. This dual stage amplifier is suitable for a wideband operation where there are many channels present, and the many channels provide a reduced time varying power variance of the optical signal, but it is also suitable where there are fewer channels and this advantage is not present provided that the system is appropriately loaded with the longer wavelength channels being preferentially selected.

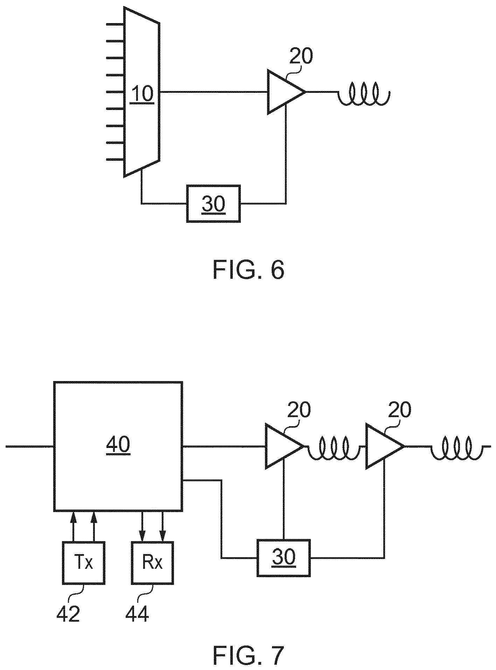

Figure 6 shows a point to point optical communication system according to an embodiment. In this embodiment there is a wavelength selective switch (WSS) 10 at the input of the optical link and signals to be transmitted are received at its input ports and transmitted to transponders where they modulate a channel of a particular waveband. The WSS multiplexes the received signals and transmits them along the optical link. The optical link has a wideband SOA 20 configured to amplify signals across a 100nm bandwidth.

As the signal is progressively loaded new inputs are added to the system and the wavelength selective switch (WSS) 10 controlled by control circuitry 30 assigns the new input signals to a particular transponder within the WSS 10 and thereby to a particular waveband channel. Control circuitry 30 controls WSS during loading of the system to preferentially assign newly added inputs to the system to the available longer wavelength channels, such that these channels are filled first and non-linear distortions due to the SOAs operating with fewer channels and thus, without a wide bandwidth signal are reduced. The control circuitry 30 also controls the output power of the amplifiers, such that a lowly loaded system operates at a lower power. This may be done where the amplifiers are dual stage amplifiers such as those shown in Figure 5, by both adjusting the power of the amplifier and the attenuation provided by the VOAs.

Figure 7 shows an optical network according to a further embodiment. In this embodiment signals are added to the system and removed from it at reconfigurable add/ drop nodes 40. These can be controlled by control circuitry 30 in a similar way to the way the WSS is controlled in Figure 6. Thus, as signals are added to the system the available channel with the longest wavelength is selected for the new signal by the reconfigurable node 40 controlled by control circuitry 30. In this case control circuitry 30 is part of the control plane of the optical network and in addition to controlling the assignment of newly added signals to channels, it will also convey information to the other nodes in the optical network regarding which channels are allocated to which inputs. Again the control circuitry 30 also controls the output power of the amplifiers, such that for a lowly loaded system the amplifiers are controlled to operate at a lower power and when the system is more highly loaded, the amplifiers are controlled to operate at a higher power.

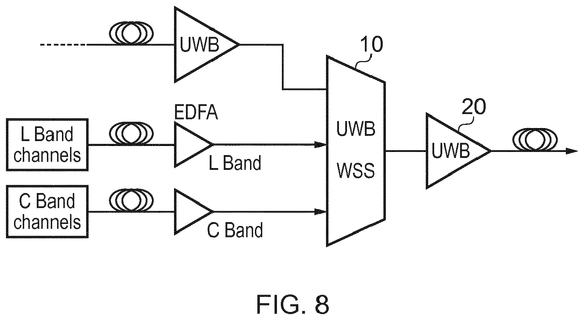

Figure 8 shows a further example where the optical communication system of an embodiment receives legacy signals from L-band and C-band optical links as well as additional signals in a waveband outside of the L and C band. The different signals are multiplexed together at a wideband WSS 10 and they are then transmitted as a wideband multiplexed signal along an optical link having wideband SOAs 20 according to an embodiment. As the wideband SOAs 20 amplify over a waveband that includes both the C and the L band the optical link can be used to transmit signals received from legacy equipment along legacy links as well as additional received signals.

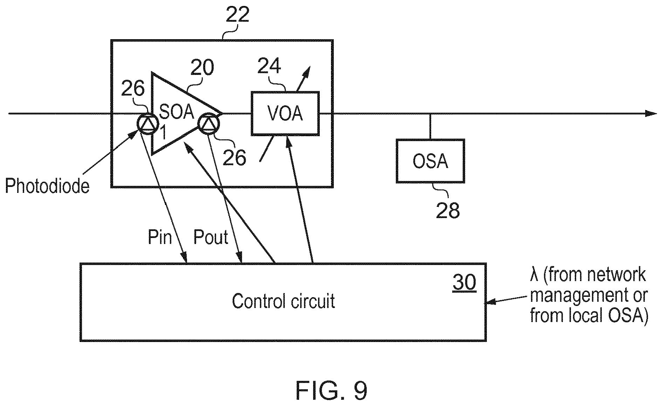

Figure 9 shows an SOA 20 and control circuitry 30 according to an embodiment. In this embodiment an amplifier block 22 comprises a semiconductor optical amplifier 20 and a variable optical attenuator 24. The SOA 20 has photodiodes at its input and output to determine the power in and power out of the optical signal. The control circuitry can adjust the pumping current to control the amplification power to within desired limits in dependence upon these power values and on the current wavelengths of the optical signal. The control circuitry 30 also controls the VOA 24 to attenuate the signal as required. The control circuitry 30 receives information regarding the current waveband of operation either from a higher level control plane that provides as an input the wavelengths of the current signals to be amplified, or it can determine this itself in response to signals from an optical spectrum analyser OSA 28 that analyses the wavelength of the signals. The control circuitry 30 updates the amplification levels in response to the waveband of operation changing, increasing the power as more channels are added, for example.

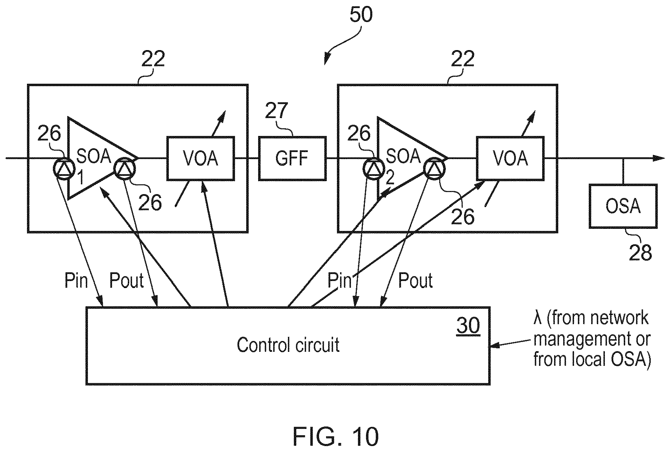

Figure 10 shows a dual stage amplifier 50 according to an embodiment. The dual stage amplifier 50 comprises two amplifier blocks 22 similar to those shown in figure 8 separated by a gain flattening filter 27. In this embodiment the control circuitry 30 receives as input signals, the input and output power of signals amplified by each SOA determined by photodiodes 26 at the inputs and outputs of these amplifiers. The control circuitry also receives the channel wavelengths of the signals being amplified either from an OSA 28 or from signals received from the network management system. The control circuitry controls the amplification of the signals in response to this information, by adjusting the SOA pumping currents and the attenuation of the VOAs. In this way where the loading of the network is low with fewer channels, the amplification is reduced by reducing the pumping current and increasing the attenuation of the VOAs. When the loading of the network is higher with more channels, then amplification can be increased by the control circuitry.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of progressively adding channels to an optical communication system configured to transmit a plurality of channels in different wavebands as a wideband wavelength division multiplexed signal, said optical communication system comprising at least one wideband semiconductor optical amplifier for amplifying said wideband signal, said method comprising:
preferentially selecting from available channels that are not currently assigned to an input signal, one of the longer wavelength channels as a next channel to be added to the system.

2. A method according to claim 1, wherein said step of preferentially selecting comprises selecting from a set of available channels where there are four or more available channels, one of the channels in the upper 25% by wavelength of said set.

3. A method according to any preceding claim, wherein said step of preferentially selecting comprises selecting a highest wavelength channel from said available channels, such that said channels are filled progressively from a highest wavelength channel to a lowest wavelength channel.

4. Control circuitry for controlling the addition of channels to an optical communication system configured to transmit a plurality of channels in different wavebands as a wideband wavelength division multiplexed signal, said optical communication system comprising at least one wideband semiconductor optical amplifier for amplifying said wideband signal; wherein
said control circuitry is configured to:
determine which of said plurality of channels are not currently assigned to an input signal and are available; and
preferentially select one of the longer wavelength available channels as a next channel to be added to the system.

5. Control circuitry according to claim 4, wherein said control circuitry is configured to select a highest wavelength channel from said available channels, such that said channels are filled under control of said control circuitry progressively from a highest wavelength channel to a lowest wavelength channel.

6. Control circuitry according to any one of claims 4 or 5, said control circuitry being further configured to control an output power of said at least one wideband semiconductor optical amplifier, said control circuitry being configured to set said output power in dependence upon a number of channels currently assigned, such that said power is set to a lower value when a number of channels currently being amplified is lower and is set to a higher value when said number of assigned channels is higher.

7. A method or control circuitry according to any preceding claim, wherein said wideband semiconductor optical amplifier is operable to amplify over a bandwidth of more than 70nm, preferably more than 100nm.

8. An optical communication system, comprising:
at least one wideband semiconductor optical amplifier, said optical signal to be transmitted as a multi-channel wavelength division multiplexed signal along an optical fibre; and
control circuitry according to any one of claims 4 to 8, for controlling the addition of channels to said optical communication system.

9. An optical communication system according to claim 8, wherein each of said at least one wideband semiconductor optical amplifiers comprises a dual stage amplifier comprising two amplifiers with a gain flattening filter located between them, at least one of said two amplifiers comprising a semiconductor optical amplifier.

10. An optical communication system according to claim 9, wherein said dual stage amplifier comprises a variable optical attenuator downstream of said at least one semiconductor optical amplifier, said variable optical attenuator being operable to attenuate a signal output by said amplifier over said bandwidth of amplification.

11. An optical communication system according to claim 10 when dependent on claim 6, wherein said control circuitry is configured to vary an output power of said at least one semiconductor output amplifier by setting said variable optical attenuator to an increased attenuation.

12. An optical communication system according to any one of claims 9 to 11, wherein said wideband of operation encompasses said C band and said L band.

13. An optical communication system according to claim 12, said optical communication system further comprising a wideband wave selective switch comprising an input for receiving signals from at least one optical fibre transmitting channels in one of said C band and said L band and at least one further input for receiving signals in at least one further waveband and an output for outputting said signals as said multi-channel wavelength division multiplexed signal to said optical fibre of said optical communication system.

14. A wideband optical amplifier operable to amplify an optical signal over a bandwidth of at least 70nm, said wideband optical amplifier comprises:
a dual stage amplifier comprising a semiconductor optical amplifier, at least one further amplifier and a gain flattening filter located between them; wherein
said dual stage semiconductor optical amplifier comprises at least one variable optical attenuator downstream of said at least one semiconductor amplifier, said variable optical attenuator being operable to attenuate a signal output by said amplifier over said bandwidth of amplification.

15. A wideband semiconductor optical amplifier according to claim 14, said dual stage amplifier comprising two semiconductor amplifiers, each of said semiconductor amplifiers comprising a variable optical attenuator downstream of said amplifier, said variable optical attenuator being operable to attenuate a signal output by said amplifier over said bandwidth of amplification to at least partially compensate for differences in the gain of said amplifier over said bandwidth of amplification.
